# EUROPÄISCHE PATENTSCHRIFT

(11) **EP 1 158 814 B1**
(45) Veröffentlichungstag und Bekanntmachung des Hinweises auf die Patenterteilung: **26.03.2008**
(21) Anmeldenummer: 00111415.6
(22) Anmeldetag: 26.05.2000
(51) Int. Cl.: H04Q 3/00

(54) **Verfahren zur Ziel-Steuerung in einem intelligenten Netz**
Method for destination control in an intelligent network
Méthode pour le contrôle de destinations dans un réseau intelligent

(43) Veröffentlichungstag der Anmeldung: 28.11.2001
(73) Patentinhaber: Nokia Siemens Networks GmbH & Co. KG, 81541 München (DE)
(72) Erfinder: Barthel, Tanja, 81369 München (DE)

(56) Entgegenhaltungen:
- WO-A-99/01992
- US-A- 5 467 388
- US-A- 6 011 975

## Beschreibung

Die Erfindung betrifft ein Verfahren zur Ziel-Steuerung in einem intelligenten Netz gemäß dem Oberbegriff von Patentanspruch 1.

Ein intelligentes Netz ermöglicht die Zuteilung einer personenbezogenen Rufnummer als Dienst. Dieser Dienst wird auch als "One-Number-Service" bezeichnet, da einem Teilnehmer eine Rufnummer zugeordnet ist, die unabhängig von einem bestimmten (Telefon-)Anschluß ist und demgemäß als virtueller Anschluß aufgefaßt werden kann.

Einen für eine solche Rufnummer eingehenden Ruf leitet das intelligente Netz, genauer gesagt, ein Dienststeuerungs-Knoten im intelligenten Netz, an einen Anschluß entsprechend einer Ziel-Liste weiter, die dem Teilnehmer bzw. seiner Rufnummer zugeordnet ist.

In einer solchen Ziel-Liste, auch "Hunting-List" genannt, sind die Rufnummern bestimmter Festnetz-, Mobil- oder sonstiger Anschlüsse eingetragen. Ferner sind in der Ziel-Liste vorbestimmte Zeiträume eingetragen, die den einzelnen Anschlüssen als Gültigkeitszeitraum zugeordnet sind.

Beispielsweise kann in einer solchen Ziel-Liste eingetragen sein, daß ein Teilnehmer während eines Zeitraums von 8:00 Uhr bis 17:00 Uhr über einen Festnetz-Anschluß im Büro und in einem Zeitraum von 17:00 Uhr bis 8:00 Uhr über einen Festnetz-Anschluß in seinem Haus oder seiner Wohnung erreichbar ist. Rufe, die dann im Zeitraum von 8:00 Uhr bis 17:00 Uhr für den Teilnehmer eingehen, werden demgemäß an den Festnetz-Anschluß im Büro geleitet, wohingegen im Zeitraum von 17:00 Uhr bis 8:00 Uhr eingehende Rufe an den Festnetz-Anschluß in der Wohnung oder im Haus des Teilnehmers geleitet werden.

Als weitere Dienstkomponente des intelligenten Netzes können die Einträge der Ziel-Liste vom Teilnehmer selbst geändert werden. Der dafür vorgesehene Dienst wird als "Customer-Service-Configuration" (CSC) bezeichnet und ist mittlerweile auch über eine Internetanbindung des Dienstmanagement-Knotens verfügbar. Hierzu kann der Teilnehmer mittels eines Web-Browsers eine beispielsweise einem Dienstmanagement-Knoten des intelligenten Netzes zugeordnete IP-Adresse aufrufen und die Einträge der Ziel-Liste selbst ändern. Dieser Dienst wird als Web-CSC bezeichnet. Allerdings müssen die Einträge der Ziel-Liste jedesmal manuell vom Teilnehmer geändert werden, wenn dieser einen anderen Zeitablauf, beispielsweise andere Bürozeiten, einstellen oder seine Anschlüsse ändern will. Das Ändern der Ziel-Liste erfordert zum einen einen Internet-Zugang und zum anderen einen hohen Zeitaufwand.

Ein anderes Beispiel ist aus dem Dokument US 6 011 975 bekannt.

Aufgabe der vorliegenden Erfindung ist es daher, ein Verfahren zur Ziel-Steuerung in einem intelligenten Netz vorzuschlagen, das wesentlich flexibler als die manuelle Verwaltung und Änderung von Ziel-Listen ist und sich vor allem weitestgehend selbständig an die Aufenthaltsorte bzw. Erreichbarkeit eines Teilnehmers anpaßt.

Diese Aufgabe wird durch ein Verfahren mit den Merkmalen von Patentanspruch 1 gelöst. Bevorzugte Ausführungsformen des Verfahrens ergeben sich aus den abhängigen Patentansprüchen.

Ein wesentlicher Punkt der Erfindung liegt darin, daß eine Änderung einer einem Teilnehmer zugeordneten Ziel-Liste in einem intelligenten Netz dadurch veranlaßt wird, daß beim An- und/oder Abmelden eines Teilnehmers an einem Terminal, das über einen Zugang zum intelligenten Netz verfügt, eine Ereignisnachricht übertragen wird. Diese Ereignisnachricht wirkt wie ein Trigger für das intelligente Netz, insbesondere einen Dienstmanagement-Knoten zum Verwalten der Dienste des Netzes, der eine Änderung der Ziel-Liste des Teilnehmers veranlaßt. Die Ereignisnachricht wird unter Beachtung von Bedingungen ausgewertet, wobei abhängig von der Auswertung ein entsprechender Eintrag der Ziel-Liste ermittelt und/oder geändert wird.

Beispielsweise kann beim Anmelden an einem Terminal im Büro des Teilnehmers eine Änderung der Ziel-Liste veranlaßt werden derart, daß alle von nun an eingehenden Anrufe für den Teilnehmer auf einen Festnetz-Anschluß im Büro weitergeleitet werden. Entsprechend kann beim Abmelden von dem Terminal im Büro eine Änderung der Ziel-Liste veranlaßt werden, durch die für den Teilnehmer eingehende Anrufe auf seinen Mobil-Anschluß (ein Mobiltelefon) weitergeleitet werden. Meldet sich der Teilnehmer an einem Terminal zu Hause an, wird wiederum die Ziel-Liste derart eingestellt, daß nun alle für ihn eingehenden Anrufe auf seinen Festnetz-Anschluß zu Hause geleitet werden. Durch das erfindungsgemäße Verfahren wird also vorteilhafterweise die Ziel-Liste automatisch aufgrund von Ereignismeldungen oder -nachrichten geändert, ohne daß ein manueller Eingriff des Teilnehmers erforderlich ist. Das intelligente Netz wertet die Ereignisnachricht aus und schaltet selbständig und flexibel die Rufweiterleitung von eingehenden Rufen um.

Vorzugsweise erfolgt die Änderung der Ziel-Liste in Abhängigkeit von verschiedenen Parametern, wie beispielsweise Uhrzeit, Datum und/oder Eingaben beim An- und/oder Abmelden. Hierdurch ist es beispielsweise möglich, daß der Teilnehmer sich für die Mittagspause an seinem Terminal im Büro abmeldet, wodurch eine Ereignisnachricht zum intelligenten Netz zusammen mit der aktuellen Uhrzeit übertragen wird, und im intelligenten Netz die Ziel-Liste so geändert wird, daß eingehende Rufe für den Teilnehmer automatisch beantwortet werden, um Anrufer über die Mittagspause des Teilnehmers zu informieren.

Besonders einfach gestaltet sich das Verfahren, wenn die Änderung der Ziel-Liste anhand einer Benutzerkennung des Teilnehmers erfolgt. Üblicherweise meldet sich der Teilnehmer an einem Terminal mit einer ihm zugeordneten Benutzerkennung an, die in der Ereignisnachricht mit an das intelligente Netz übertragen werden kann. Dies entspricht einer Authentifizierung des Teilnehmers, wodurch das Verfahren unabhängig von bestimmten Terminals wird. Als einzige Voraussetzung zum Ablauf des Verfahrens muß demnach ein Terminal, über das sich der Teilnehmer an- oder abmeldet, einen Zugang zum intelligenten Netz aufweisen.

Diesen Gedanken erweiternd, wird in einer weiteren vorteilhaften Ausführung eine Kennung des Terminals übermittelt, an dem sich der Teilnehmer an- oder abmeldet, wodurch im intelligenten Netz durch Auswertung einer entsprechenden Datenbank der Aufenthaltsort des Teilnehmers einfach bestimmt werden kann. Diese Bestimmung des Aufenthaltsorts kann die Änderung der Ziel-Liste beispielsweise dahingehend beeinflussen, daß eingehende Rufe für den Teilnehmer immer auf einen Festnetz-Anschluß in der Nähe des entsprechenden Terminals geleitet werden. Falls kein Festnetz-Anschluß in der Nähe des Terminals vorhanden ist, kann auch automatisch auf einen Mobil-Anschluß, eine Mailbox oder eine Ansage geschaltet werden. Hierdurch wird die Ziel-Liste dynamisch an die Aufenthaltsorte des Teilnehmers angepaßt. Unter Aufenthaltsorten werden hierbei natürlich die Terminals verstanden, an denen sich der Teilnehmer an- oder abmeldet.

Als weitere Ausgestaltung des Verfahrens ist vorgesehen, daß die Ziel-Liste zu vorgegebenen Uhrzeiten oder an bestimmten Tagen automatisch derart geändert wird, so daß alle für den Teilnehmer eingehenden Anrufe auf eine Mailbox geleitet oder mit einer automatischen Ansage beantwortet werden. Alternativ kann auch die Änderung der Ziel-Liste zu bestimmten, vorgegebenen Uhrzeiten oder an bestimmten Tagen gesperrt werden, wodurch es beispielsweise ermöglicht wird, daß für den Teilnehmer eingehende Rufe am Wochenende immer auf das Mobiltelefon des Teilnehmers geleitet oder mit einer automatischen Ansage beantwortet werden.

Vorzugsweise kann die Ereignisnachricht auch als Short-Message übertragen werden, wie sie bei Mobiltelefonen häufig verwendet wird. Dadurch ist es im Prinzip möglich, eine Änderung der Ziel-Liste auch von einem Mobiltelefon aus zu veranlassen, d.h. dieses als Terminal zum An- oder Abmelden zu verwenden.

Die Ereignisnachricht wird vorzugsweise über eine Internet-Protokoll-Verbindung an einen Server des intelligenten Netzes übertragen, da eine Internet-Verbindung bzw. ein Internet-Anschluß bei Terminals sehr verbreitet und preisgünstig ist. Im Prinzip kann dann dieser Vorgang durch ein beim An- oder Abmelden ablaufendes Programm bewerkstelligt werden, und zwar derart, daß das Programm beim An- oder Abmelden eine Internet-Verbindung zu dem Server des intelligenten Netzes aufbaut und an diesen die erwähnte Ereignisnachricht überträgt. Vorzugsweise bildet der besagte Server einen Dienstmanagement-Knoten des intelligenten Netzes, d.h. die Übertragung der Ereignisnachricht erfolgt direkt an einen Dienstmanagement-Knoten. Bei dieser Ausführungsform wird auf einem als Dienstmanagement-Knoten vorgesehenen Server entsprechende Funktionalität zum Verarbeiten der Ereignisnachricht bereitgestellt. Diese Funktionalität läßt sich typischerweise durch Bereitstellung zusätzlicher Programmmodule auf dem Server einführen.

Alternativ zu der Übertragung der Ereignisnachricht über eine Internet-Protokoll-Verbindung an einen Server kann die Übertragung auch per Funk an eine mit dem intelligenten Netz gekoppelte Basisstation erfolgen. Vorzugsweise wird die Basisstation zu einem Mobilfunknetz gehören, das wiederum mit dem intelligenten Netz gekoppelt ist.

Als Terminal wird in professionellen Anwendungen bevorzugt ein Personal-Computer (PC) eingesetzt. Vorzugsweise kann der PC in ein lokales Rechnernetz, beispielsweise in einer Firma oder auch in kleinen Büros bzw. im Privatbereich eingebunden sein. Bei einer Einbindung in ein lokales Netz reicht es im Prinzip aus, wenn ein Rechner im Netz eine Verbindung zum intelligenten Netz besitzt, beispielsweise ein sogenannter Gateway-Server, über den alle Zugriffe aus dem lokalen Netz heraus, beispielsweise auf das Internet oder ein WAN (Wide Area Network) durchgeführt werden.

Der PC kann auch über eine Funkschnittstelle in das lokale Rechnernetz eingebunden sein. Dies erweist sich als bei tragbaren Terminals, wie Laptops als besonders nützlich, da eine meistens störende leitungsgebundene Ankopplung des Terminals bzw. des PCs an das lokale Netz entfällt. Befindet sich das Terminal bzw. der PC im Funkbereich der Funkschnittstelle, kann sich der Teilnehmer über das Terminal bzw. den PC in das entsprechende lokale Rechnernetz einbuchen, wobei gleichzeitig eine entsprechende Ereignisnachricht zur Änderung der Ziel-Liste im intelligenten Netz veranlaßt werden kann.

Die Ziel-Liste ist vorzugsweise als Datenbank im intelligenten Netz ausgebildet. Die Datenbank weist Einträge auf, durch die dem Teilnehmer in vorbestimmten Zeiträumen bestimmte Ziele zugeordnet sind. Diese Einträge können als Standardeinträge betrachtet werden, die durch das erfindungsgemäße Verfahren jederzeit änderbar sind. Beispielsweise kann dort eingestellt sein, daß der Teilnehmer während eines Zeitraums von 8:00 Uhr bis 17:00 Uhr über seinen Festnetz-Anschluß im Büro und von 17:00 Uhr bis 8:00 Uhr über seinen Festnetz-Anschluß zu Hause erreichbar ist. Die Umschaltung bzw. Weiterleitung von für den Teilnehmer eingehenden Anrufen wird dann entsprechend dieser in der Ziel-Liste eingestellten Werte vorgenommen, kann aber beispielsweise dadurch geändert werden, daß sich der Teilnehmer um 9:00 Uhr an seinem Terminal zu Hause anmeldet, wodurch die Ziel-Liste automatisch derart geändert wird, daß eingehende Anrufe auf den Festnetz-Anschluß des Teilnehmers zu Hause umgeleitet werden.

Die Ereignisnachricht wird vorzugsweise unter Beachtung von Bedingungen wie Datum, Uhrzeit und/oder vom Teilnehmer vorgegebenen Bedingungen ausgewertet, wobei anhand der vorgegebenen bzw. eingestellten Bedingungen ein entsprechender Eintrag der Datenbank ermittelt wird und eingehende Anrufe für den Teilnehmer auf einen Anschluß weitergeleitet werden, der als Ziel in dem ermittelten Datenbankeintrag angegeben ist.

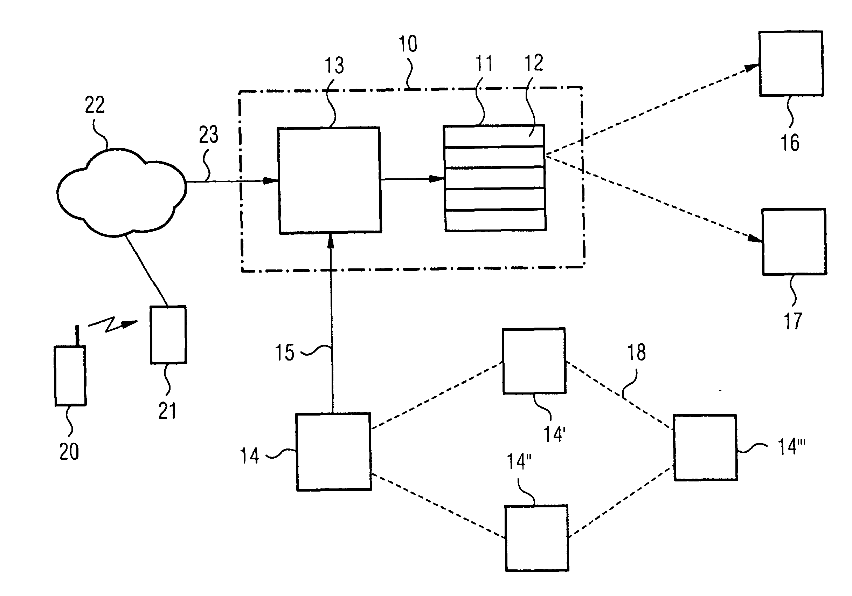

Weitere Vorteile und Anwendungsmöglichkeiten der Erfindung ergeben sich aus der nachfolgenden Beschreibung eines Ausführungsbeispiels in Verbindung mit der einzigen Zeichnung. Diese zeigt anhand eines Blockschaltbildes die bei dem Verfahren eingesetzten und typischen Komponenten.

Ein Dienstmanagement-Knoten 10 eines intelligenten Netzes weist eine Ziel-Liste 11 eines Teilnehmers auf, in der Einträge 12 vorgesehen sind, die von einer Anrufleit-Steuerung 13 geändert werden können.

Die Anrufleit-Steuerung 13 empfängt von einem Terminal 14 über eine Leitung 15 Ereignismeldungen oder -nachrichten des Terminals, die sich auf ein An- oder Abmelden des Teilnehmers beziehen, dem die Ziel-Liste 11 zugeordnet ist. Sobald sich der Teilnehmer an dem Terminal 14 anmeldet, generiert dieses, genauer gesagt ein dafür vorgesehenes Programm, eine Ereignisnachricht, welche die Terminal-Identität und die Benutzerkennung des Teilnehmers enthält, und sendet diese an die Anrufleit-Steuerung 13 im Dienstmanagement-Knoten 10 des intelligenten Netzes.

Die Anrufleit-Steuerung 13 wiederum sucht anhand der übermittelten Benutzerkennung des Teilnehmers die entsprechende Ziel-Liste 11 aus einer Datenbank und ändert automatisch den der aktuellen Zeit zugeordneten Eintrag in der Ziel-Liste 11 dahingehend, daß für den Teilnehmer eingehende Anrufe nicht mehr an einen ersten Festnetz-Anschuß 16, sondern an einen zweiten Festnetz-Anschluß 17 weitergeleitet werden, der sich örtlich in der Nähe des Terminals 14 befindet.

Solange der Teilnehmer an dem Terminal 14 angemeldet ist, werden also alle für ihn eingehenden Anrufe an den zweiten Festnetz-Anschluß 17 geleitet. Sobald er sich von dem Terminal 14 abmeldet, wird wieder eine Ereignisnachricht über die Leitung 15 an die Anrufleit-Steuerung 13 übertragen, die den der aktuellen Zeit zugeordneten Eintrag 12 in der Ziel-Liste 11 dahingehend ändert, daß alle für den Teilnehmer eingehenden Rufe an den ersten Festnetz-Anschluß 16, der sich zu Hause beim Teilnehmer befindet, geleitet werden.

Das Terminal 14 ist über ein LAN 19 (Local Area Network) mit weiteren Terminals 14'-14"' gekoppelt, die sich an anderen Orten, beispielsweise in verschiedenen Räumen oder Gebäuden, befinden können. An jedem dieser Terminals 14'-14"' kann sich der Teilnehmer anmelden, wodurch mittels eines entsprechenden Programmes eine Ereignisnachricht von dem jeweiligen Terminal über das LAN 19 an das Terminal 14 gesendet wird. Das Terminal 14 wiederum leitet die empfangene Ereignisnachricht an das intelligente Netz weiter.

Schließlich ist noch ein Mobilterminal oder -telefon 20 dargestellt, das mit einer Basisstation 21 eines Mobilfunknetzes 22 in Funkverbindung steht. Das Mobilfunknetz 22 ist über eine Verbindung 23 mit dem Dienstmanagement-Knoten 10 des intelligenten Netzes verbunden, so daß beim Anmelden des Mobilterminals oder -telefons 20 eines Teilnehmers an der Basisstation 21 über das Mobilfunknetz 22 und die Verbindung 23 an die Anrufleit-Steuerung 13 eine Ereignisnachricht übermittelt wird. Diese bewirkt, daß die in der Ziel-Liste 11 eingetragen wird, daß der Teilnehmer momentan über sein Mobilterminal oder -telefon 20 erreichbar ist.

Im folgenden wird ein etwas komplizierteres Umschalten von Anrufweiterleitungen nach dem erfindungsgemäßen Verfahren erläutert:

Der Teilnehmer A ist in seiner Freizeit entweder über ein Mobiltelefon, über seinen Festnetz-Anschluß zu Hause oder über einen Anrufbeantwortet erreichbar. Zur Arbeitszeit ist er über seinen Festnetz-Anschluß im Büro, über einen Anschluß seines Sekretariats, über ein Mobiltelefon oder über einen Anrufbeantworter erreichbar. Sobald er sich an seinem PC im Büro anmeldet, wird anhand seiner Benutzerkennung automatisch eine Ereignisnachricht bzw. ein Trigger an ein intelligentes Netz übermittelt. Die Übermittlung kann auch per Short-Message, E-Mail oder über das Internet-Protokoll erfolgen.

Im intelligenten Netz empfängt ein Dienstmanagement-Knoten die Ereignisnachricht bzw. den Trigger und stellt eine dem Teilnehmer A zugeordnete Ziel-Liste von Freizeit auf Bürozeit automatisch um, wodurch alle für ihn eingehenden Anrufe automatisch an die in der Ziel-Liste für Bürozeit entsprechenden Anschlüsse geleitet werden.

Meldet er sich nicht an seinem Personal-Computer im Büro, sondern an einem anderen Personal-Computer, beispielsweise in einem anderen Raum, in der Arbeit an, wird von diesem Personal-Computer ebenfalls eine Ereignisnachricht bzw. ein Trigger an den Dienstmanagement-Knoten des intelligenten Netzes übermittelt. Im Dienstmanagement-Knoten wird die empfangene Ereignisnachricht ausgewertet, wobei festgestellt wird, daß diese nicht von dem Personal-Computer des Teilnehmers A, sondern von einem anderen Personal-Computer stammt. Daraufhin wird ein Eintrag in der Ziel-Liste des Teilnehmers A dahingehend geändert, daß alle Anrufe für den Teilnehmer A auf einen Festnetz-Anschluß umgeleitet werden, der sich örtlich in der Nähe des Personal-Computers befindet, an dem er sich angemeldet hat. Hierzu wertet der Dienstmanagement-Knoten eine Datenbank aus, in der PCs Festnetz-Anschlüsse zugeordnet sind.

Wenn der Teilnehmer A in die Mittagspause geht, kann er an dem PC, an dem er gerade angemeldet ist, mittels eines entsprechenden Programmes eine Ereignisnachricht generieren, die eine Änderung der Ziel-Liste dahingehend bewirkt, daß eingehende Anrufe mit einer automatischen Ansage beantwortet werden. Ebenso kann er eine Änderung der Ziel-Liste veranlassen, wenn er in eine Besprechung geht. Hierbei kann er an dem PC, an dem er aktuell angemeldet ist, wiederum eine Ereignisnachricht erzeugen, die dem Dienstmanagement-Knoten des intelligenten Netzes mitteilt, daß der Teilnehmer A in einer Besprechung ist. Der Dienstmanagement-Knoten kann dann automatisch die Ziel-Liste derart ändern, daß alle eingehenden Anrufe mit einer automatischen Ansage beantwortet werden, die spezifisch für Besprechungen vorgesehen ist und beispielsweise einem Anrufer genauere Hinweise über beispielsweise die Besprechungsdauer gibt.

Beim Abmelden des Teilnehmers von seinem PC wird wieder eine Ereignisnachricht erzeugt, die eine Umstellung in der Ziel-Liste derartig bewirkt, daß alle für ihn eingehenden Anrufe entsprechend den Einstellungen für Freizeit umgeleitet werden.

Das automatische Ändern der Ziel-Liste kann aber auch verhindert oder gar abgeschaltet werden, indem beim Anmelden des Teilnehmers an einem PC eine Abfrage erscheint, über die festgelegt werden kann, daß die Einträge in der Ziel-Liste durch das An- und/oder Abmelden nicht geändert werden sollen. Dies ist dann vorteilhaft, wenn beispielsweise alle Anrufe auf eine Mailbox geleitet werden sollen, um den Teilnehmer nicht zu stören.

Auch in Urlaubszeiten oder bei Dienstreisen kann über das erfindungsgemäße Verfahren die Ziel-Liste leichter und flexibler als bisher umgestellt werden. Insbesondere ist es nicht erforderlich, neue Ansagen auf Anrufbeantworter aufzusprechen, sondern es kann einfach beim Abmelden vom PC angegeben werden, daß sich der Teilnehmer im Urlaub befindet. Die Anrufweiterleitung wird dann im intelligenten Netz derart umgestellt, daß entweder jeder eingehende Anruf für den Teilnehmer auf eine Mailbox geleitet wird oder automatisch mit einem Hinweis auf die Urlaubszeit oder Dienstreise beantwortet wird.

## Patentansprüche

1. Verfahren zur Ziel-Steuerung in einem intelligenten Netz, wobei eine Ziel-Liste (11) für eine Rufnummer eines Teilnehmers vorgesehen ist, die Einträge (12) aufweist, durch die dem Teilnehmer in vorbestimmten Zeiträumen bestimmte Anschlüsse (16, 17) zugeordnet sind, derart, daß unter der Rufnummer des Teilnehmers eingehende Rufe an einen entsprechenden Anschluß (16, 17) weitergeleitet werden, der in einem entsprechenden Eintrag als Ziel angegeben ist,
**dadurch gekennzeichnet, daß**
beim An- und/oder Abmelden des Teilnehmers an einem Terminal (14) über einen Zugang (15) zum intelligenten Netz eine Ereignisnachricht übertragen wird, die eine Änderung der Ziel-Liste (11) veranlaßt, wobei die Ereignisnachricht unter Beachtung von Bedingungen ausgewertet und davon abhängig ein entsprechender Eintrag (12) der Ziel-Liste (11) ermittelt und/oder geändert wird.

2. Verfahren nach Anspruch 1,
**dadurch gekennzeichnet, daß**
die Änderung der Ziel-Liste (11) in Abhängigkeit von Uhrzeit, Datum, vorgegebenen Bedingungen und/oder Eingaben beim An- und/oder Abmelden erfolgt.

3. Verfahren nach Anspruch 1 oder 2,
**dadurch gekennzeichnet, daß**
die Änderung der Ziel-Liste (11) anhand einer Benutzerkennung des Teilnehmers erfolgt.

4. Verfahren nach einem der vorhergehenden Ansprüche,
**dadurch gekennzeichnet, daß**
beim Anmelden eine Kennung des Terminals (14) an das intelligente Netz übermittelt wird, über die ein Aufenthaltsort des Teilnehmers bestimmt wird, wodurch die Änderung der Ziel-Liste (11) beeinflußt wird.

5. Verfahren nach einem der vorhergehenden Ansprüche,
**dadurch gekennzeichnet, daß**
zu vorgegebenen Uhrzeiten oder an bestimmten Tagen die Ziel-Liste (11) automatisch derart geändert wird, daß alle für den Teilnehmer eingehenden Anrufe auf eine Mailbox geleitet oder mit einer automatischen Ansage beantwortet werden.

6. Verfahren nach einem Ansprüche 1 bis 4,
**dadurch gekennzeichnet, daß**
zu vorgegebenen Uhrzeiten oder an bestimmten Tagen die Änderung der Ziel-Liste (11) gesperrt wird.

7. Verfahren nach einem der vorhergehenden Ansprüche,
**dadurch gekennzeichnet, daß**
die Ereignisnachricht als Short-Message übertragen wird.

8. Verfahren nach einem der vorhergehenden Ansprüche,
**dadurch gekennzeichnet, daß**
die Ereignisnachricht über eine Internet-Protokoll-Verbindung (15) an einen Server (10) des intelligenten Netzes übertragen wird, der einen Dienstmanagement-Knoten (10) des intelligenten Netzes bildet.

9. Verfahren nach einem der Ansprüche 1 bis 7,
**dadurch gekennzeichnet, daß**
die Ereignisnachricht per Funk an eine mit dem intelligenten Netz gekoppelte Basisstation (21), insbesondere eines Mobilfunknetzes (22), übertragen wird.

## Claims

1. Method for destination control in an intelligent network, where a destination list (11) for a subscriber's telephone number is provided which has entries (12) associating particular connections (16, 17) with the subscriber during predetermined time periods such that incoming calls to the subscriber's telephone number are transferred to an appropriate connection (16, 17) indicated as destination in a corresponding entry,
**characterized in that**,
when the subscriber logs on and/or off at a terminal (14) using an access point (15) to the intelligent network, an event message is transmitted which changes the destination list (11), the event message being evaluated by taking into account conditions, and a corresponding entry (12) in the destination list (11) being ascertained and/or changed on the basis of this.

2. Method according to claim 1,
**characterized in that**
the destination list (11) is changed on the basis of time of day, date, prescribed conditions and/or inputs during logging on and/or off.

3. Method according to claim 1 or 2,
**characterized in that**
the destination list (11) is changed using a user identifier for the subscriber.

4. Method according to one of the preceding claims,
**characterized in that**,
upon logging on, an identifier for the terminal (14) is transmitted to the intelligent network and is used to determine a whereabouts for the subscriber, which influences the change to the destination list (11).

5. Method according to one of the preceding claims,
**characterized in that**
the destination list (11) is automatically changed at prescribed times of day or on particular days such that all incoming calls for the subscriber are routed to a mailbox or are answered using an automatic recorded announcement.

6. Method according to one of claims 1 to 4,
**characterized in that**
change to the destination list (11) is blocked at prescribed times of day or on particular days.

7. Method according to one of the preceding claims,
**characterized in that**
the event message is transmitted in the form of a short message.

8. Method according to one of the preceding claims,
**characterized in that**
the event message is transmitted via an Internet protocol link (15) to an intelligent network server (10) which forms a service management node (10) of the intelligent network.

9. Method according to one of claims 1 to 7,
**characterized in that**
the event message is transmitted by radio to a base station (21) coupled to the intelligent network, in particular in a mobile radio network (22).

## Revendications

1. Procédé pour la commande des destinations dans un réseau intelligent, dans lequel est prévu une liste des destinations (11) pour un numéro d'appel d'un participant, ladite liste présentant des enregistrements (12) au moyen desquels certaines connexions (16, 17) sont attribuées au participant à des intervalles de temps prédéterminés de telle sorte que des appels qui arrivent sous le numéro d'appel du participant sont retransmis à une connexion correspondante (16, 17) qui est indiquée comme destination dans un enregistrement correspondant,
**caractérisé en ce que**
un message d'événement qui provoque une modification de la liste des destinations (11) est transmis vers le réseau intelligent en cas de déclaration d'un commencement et/ou d'une fin de session d'un participant sur un terminal (14) par l'intermédiaire d'un accès (15), sachant que le message d'événement est évalué sous la considération de conditions et qu'en fonction de cela, un enregistrement correspondant (12) de la liste des destinations (11) est déterminé et/ou modifié.

2. Procédé selon la revendication 1,
**caractérisé en ce que**
la modification de la liste des destinations (11) a lieu en fonction de l'heure, de la date, des conditions prescrites et/ou des saisies lors de la déclaration d'un commencement et/ou d'une fin de session.

3. Procédé selon la revendication 1 ou 2,
**caractérisé en ce que**
la modification de la liste des destinations (11) a lieu à l'aide d'un code d'utilisateur du participant.

4. Procédé selon l'une des revendications précédentes,
**caractérisé en ce que**
un code du terminal (14) au moyen duquel est déterminé un lieu de séjour du participant, est communiqué au réseau intelligent lors de la déclaration d'un commencement de session, à la suite de quoi la modification de la liste des destinations (11) est influencée.

5. Procédé selon l'une des revendications précédentes,
**caractérisé en ce que**
la liste des destinations (11) est modifiée automatiquement à des heures prescrites ou à certains jours de telle sorte que tous les appels qui arrivent pour le participant sont acheminés vers une boîte aux lettres ou reçoivent une réponse par une annonce vocale automatique.

6. Procédé selon l'une des revendications 1 à 4,
**caractérisé en ce que**
la modification de la liste des destinations (11) est verrouillée à des heures prescrites ou à certains jours.

7. Procédé selon l'une des revendications précédentes,
**caractérisé en ce que**
le message d'événement est transmis comme message court.

8. Procédé selon l'une des revendications précédentes,
**caractérisé en ce que**
le message d'événement est transmis à un serveur (10) du réseau intelligent par l'intermédiaire d'une liaison au protocole Internet (15), ledit serveur formant un noeud de gestion des services (10) du réseau intelligent.

9. Procédé selon l'une des revendications 1 à 7,
**caractérisé en ce que**
le message d'événement est transmis par radio à une station de base (21) couplée au réseau intelligent, en particulier un réseau de téléphonie mobile (22).
